# EUROPEAN PATENT APPLICATION

(11) **EP 4 528 893 A1**
(43) Date of publication of application: **26.03.2025**
(21) Application number: 23807401.7
(22) Date of filing: 26.04.2023
(51) Int. Cl.: H01M 50/167, H01M 50/107, H01M 50/119, H01M 50/152, H01M 50/159, H01M 50/184, H01M 50/559

(54) **CYLINDRICAL BATTERY**

(30) Priority: 17.05.2022 JP 2022080573
(71) Applicant: Panasonic Energy Co., Ltd., Osaka 570-8511 (JP)
(72) Inventor: MORITA, Masahito, Osaka 571-0057 (JP); ITO, Katsuya, Osaka 571-0057 (JP)
(74) Representative: Eisenführ Speiser
(86) International application number: PCT/JP2023/016471
(87) International publication number: WO 2023/223791

(57) **Abstract**

A cylindrical battery (10) comprises an outer case can (16), an electrode body (14) that is accommodated in the outer case can (16), and a sealing body (17) that covers an opening portion of the outer case can (16). The outer case can (16) comprises: a bottom plate portion (68); a cylinder portion (43) that is connected to the bottom plate portion (68) via an annular corner portion (42) that is positioned outward in the radial direction, and extends in the axial direction; and a rolled-back portion (45) that is connected to an end portion of the cylinder portion (43) that is on the opposite side from the corner portion (42) in the axial direction. The sealing body (17) comprises a rolled-back portion (31) that has an end portion on the outside in the radial direction, the end portion being secured to the rolled-back portion (45).

## Description

### TECHNICAL FIELD

The present disclosure generally relates to a cylindrical battery.

### BACKGROUND ART

Among conventional cylindrical batteries, there is a cylindrical battery disclosed in FIG. 3 of PATENT LITERATURE 1. The cylindrical battery comprises an exterior housing can, an electrode assembly that is housed in the exterior housing can, and a sealing assembly with which an opening portion of the exterior housing can is capped. The sealing assembly is fixed by caulking to the opening portion of the exterior housing can with a gasket interposed between the sealing assembly and the opening portion. The exterior housing can has a shoulder portion, a grooved portion, a cylindrical portion, and a bottom plate portion. The grooved portion can be formed by annularly recessing one part of the side wall of the exterior housing can toward the radially inward side. The sealing assembly is subjected to a force on the side of the opening portion in the axial direction via the gasket from an annular projecting portion that projects toward the radially inward side by formation of the grooved portion. The shoulder portion is formed by bending an upper end portion of the exterior housing can to the inner side toward a circumferential edge portion of the sealing assembly when the sealing assembly is fixed by caulking to the exterior housing can.

### CITATION LIST

### PATENT LITERATURE

PATENT LITERATURE 1: Japanese Unexamined Patent Application Publication No. 2000-48825

### SUMMARY

In the above-described cylindrical battery, since the exterior housing can has the grooved portion, a housing portion of the electrode assembly in the exterior housing can is restricted to a bottom plate portion side of the exterior housing can with respect to the grooved portion as to the height direction (axial direction) of the cylindrical battery. This makes it difficult to increase the size of the housing portion and increase the battery capacity. It is an advantage of the present disclosure to provide a cylindrical battery in which a housing portion of an electrode assembly can be increased in size and a battery capacity can be increased.

In order to solve the above-described problems, a cylindrical battery according to the present disclosure comprises an exterior housing can, an electrode assembly that is housed in the exterior housing can, and a sealing assembly with which an opening portion of the exterior housing can is capped, wherein the exterior housing can has a bottom plate portion, a cylindrical portion that is connected to the bottom plate portion via an annular corner portion that is located on a radially outward side, and extends in an axial direction, and a first foldback portion that is connected to an end portion on a side opposite to a side of the corner portion in the cylindrical portion in the axial direction, and the sealing assembly has a second foldback portion in which an end portion of a radially outward side is fixed to the first foldback portion.

According to the cylindrical battery of the present disclosure, the housing portion of the electrode assembly can be increased in size and the battery capacity can be increased.

### BRIEF DESCRIPTION OF DRAWING

FIG. 1 is an axial sectional view of a cylindrical battery according to an embodiment of the present disclosure.
FIG. 2 is a perspective view of an electrode assembly of the cylindrical battery.
FIG. 3A is a schematic sectional view of one part of a cylindrical battery of Comparative Example illustrating a method of forming a shoulder portion in the cylindrical battery of Comparative Example.
FIG. 3B is a schematic sectional view of one part of a cylindrical battery of Comparative Example illustrating a method of forming a shoulder portion in the cylindrical battery of Comparative Example.
FIG. 4A is a schematic sectional view of one part of the cylindrical battery of the embodiment illustrating foldback crimping of the cylindrical battery of the embodiment.
FIG. 4B is a schematic sectional view of one part of the cylindrical battery of the embodiment illustrating foldback crimping of the cylindrical battery of the embodiment.
FIG. 4C is a schematic sectional view corresponding to FIG. 4B in a cylindrical battery of a modified example.
FIG. 5A is a diagram illustrating details of a battery height in each portion in a battery of Example.
FIG. 5B is a diagram illustrating details of a battery height in each portion in a battery of Comparative Example.
FIG. 6 is an expanded sectional view of the periphery of a shoulder portion of a cylindrical battery of a Reference Example.
FIG. 7 is an expanded sectional view corresponding to FIG. 6 in a cylindrical battery of Example.

### DESCRIPTION OF EMBODIMENTS

Hereinafter, an embodiment of a cylindrical battery according to the present disclosure will be described in detail with reference to the drawings. The cylindrical battery of the present disclosure may be a primary battery, or may be a secondary battery. Additionally, the cylindrical battery may be a battery using an aqueous electrolyte, or may be a battery using a non-aqueous electrolyte. In the following, a non-aqueous electrolyte secondary battery (lithium ion battery) using a non-aqueous electrolyte will be exemplified as a cylindrical battery 10 of an embodiment, but the cylindrical battery of the present disclosure is not limited to this.

It is assumed from the beginning that a new embodiment is constructed by appropriately combining the feature portions of an embodiment and a modified examples which are described below. In the following embodiments, the same components are denoted by the same reference numerals in the drawings, and duplicate descriptions are omitted. Schematic diagrams are included in a plurality of the drawings, and the dimensional ratios such as lengths, widths and heights of each member between different drawings are not necessarily the same. In this specification, a sealing assembly 17 side in an axial direction (height direction) of a cylindrical battery 10 is defined as "upper", and a bottom plate portion 68 side of an exterior housing can 16 in the axial direction is defined as "lower". Of the components described below, components that are not described in the independent claim indicating the highest level concept are arbitrary components, and are not essential components. The present disclosure is not limited to the following embodiment and modified example thereof, and various improvements and changes are possible within the matters described in the claims of the present application and the scope of equivalence of claims.

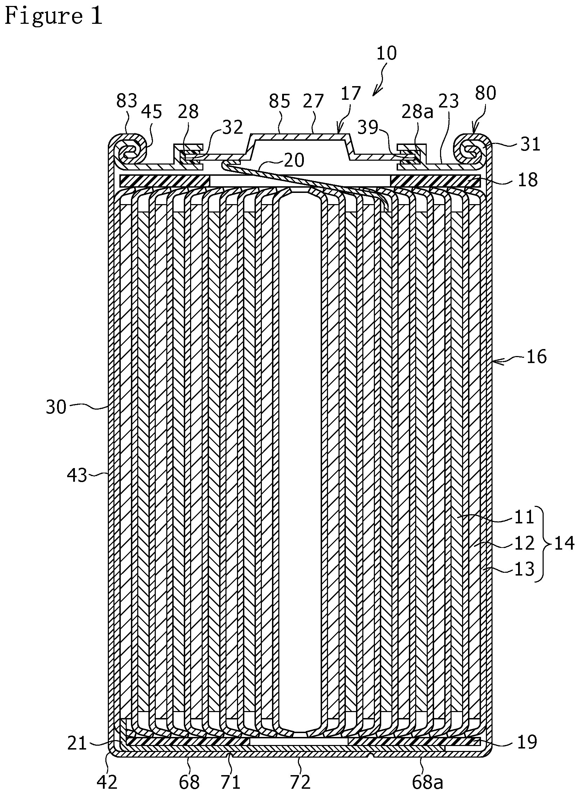

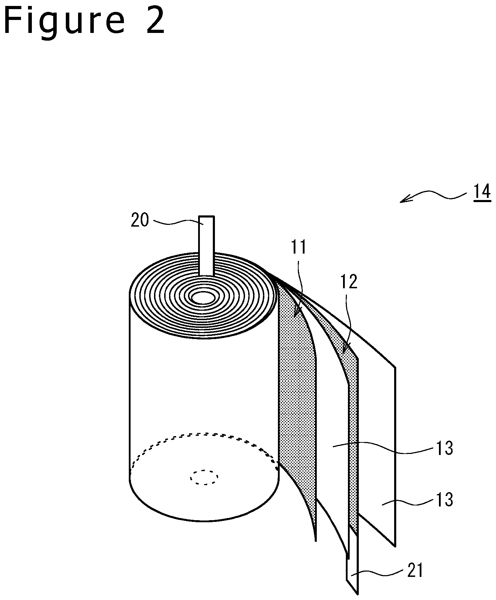

FIG. 1 is an axial sectional view of the cylindrical battery 10 according to an embodiment of the present disclosure, and FIG. 2 is a perspective view of an electrode assembly 14 of the cylindrical battery 10. As illustrated in FIG. 1, the cylindrical battery 10 comprises a wound-type electrode assembly 14, a non-aqueous electrolyte (not illustrated), a bottomed cylindrical metal exterior housing can 16 that houses the electrode assembly 14 and the non-aqueous electrolyte, and a sealing assembly 17 with which an opening portion of the exterior housing can 16 is capped. As illustrated in FIG. 2, the electrode assembly 14 has a wound structure in which an elongated positive electrode 11 and an elongated negative electrode 12 are wound with two elongated separators 13 each interposed between the positive electrode 11 and the negative electrode 12.

The negative electrode 12 is formed to be one size larger than the positive electrode 11 in order to prevent precipitation of lithium. That is, the negative electrode 12 is formed to be longer in the longitudinal direction and the width direction (short direction) than the positive electrode 11. The two separators 13 are each formed to be at least one size larger than the positive electrode 11, and are disposed so as to interpose, for example, the positive electrode 11 therebetween. The negative electrode 12 may include a winding start end of the electrode assembly 14. However, the separator 13 generally extends beyond a winding start side end of the negative electrode 12, and a winding start side end of the separator 13 serves as the winding start end of the electrode assembly 14.

The non-aqueous electrolyte includes a non-aqueous solvent, and an electrolyte salt dissolved in the non-aqueous solvent. Examples of the non-aqueous solvent may include esters, ethers, nitriles, amides, and mixed solvents containing two or more selected from the foregoing. The non-aqueous solvent may contain a halogen-substituted product obtained by substituting at least some of hydrogen atoms in these solvents with a halogen atom such as fluorine. Note that the non-aqueous electrolyte is not limited to a liquid electrolyte and may be a solid electrolyte that uses a gel polymer or the like. As the electrolyte salt, a lithium salt such as LiPF₆ is used.

The positive electrode 11 has a positive electrode current collector and a positive electrode mixture layer formed on each surface of the positive electrode current collector. Examples of the positive electrode current collector may include a foil of metal such as aluminum or an aluminum alloy, which is stable within a potential range of the positive electrode 11, and a film in which such a metal is disposed on a surface layer thereof. The positive electrode mixture layer includes a positive electrode active material, a conductive agent, and a binder. The positive electrode 11 can be produced by, for example, applying a positive electrode mixture slurry including a positive electrode active material, a conductive agent, a binder, and the like on a positive electrode current collector, drying the resulting coating film, and then compressing the coating film to form a positive electrode mixture layer on each surface of the current collector.

The positive electrode active material is composed of a lithium-containing metal composite oxide as a main component. Examples of metal elements contained in the lithium-containing metal composite oxide include Ni, Co, Mn, Al, B, Mg, Ti, V, Cr, Fe, Cu, Zn, Ga, Sr, Zr, Nb, In, Sn, Ta, and W. An example of a preferable lithium-containing metal composite oxide is a composite oxide containing at least one of Ni, Co, Mn and Al.

Examples of the conductive agent included in the positive electrode mixture layer may include carbon materials such as carbon black, acetylene black, Ketjen black, and graphite. Examples of the binder included in the positive electrode mixture layer may include fluorocarbon resins such as polytetrafluoroethylene (PTFE) and polyvinylidene fluoride (PVdF), polyacrylonitrile (PAN), polyimide resins, acrylic resins, and polyolefin resins. These resins may be used in combination with cellulose derivatives such as carboxymethyl cellulose (CMC) or a salt thereof, a polyethylene oxide (PEO), or the like.

The negative electrode 12 has a negative electrode current collector and a negative electrode mixture layer formed on each surface of the negative electrode current collector. Examples of the negative electrode current collector may include a foil of a metal such as copper or a copper alloy, which is stable within a potential range of the negative electrode 12, and a film in which such a metal is disposed on a surface layer thereof. The negative electrode mixture layer includes a negative electrode active material, and a binder. The negative electrode 12 can be produced by, for example, applying a negative electrode mixture slurry including a negative electrode active material, a binder, and the like on a negative electrode current collector, drying the resulting coating film, and then compressing the coating film to form a negative electrode mixture layer on each surface of the electrode current collector.

As the negative electrode active material, a carbon material that reversibly occludes and releases lithium ions is generally used. A preferable carbon material is graphite including natural graphite such as flaky graphite, massive graphite, and earthy graphite, and artificial graphite such as massive artificial graphite and graphitized mesophase carbon microbeads. As the negative electrode active material, a silicon (Si) material containing Si may be included in the negative electrode mixture layer. As the negative electrode active material, a metal alloyed with lithium other than Si, an alloy containing such a metal, a compound containing such a metal, and the like may be used.

As the binder included in the negative electrode mixture layer, fluorocarbon resins, PAN, polyimide resins, acrylic resins, polyolefin resins, and the like may be used as in the case of the positive electrode 11, and a styrene-butadiene rubber (SBR) or a modification thereof is preferably used. In the negative electrode mixture layer, for example, in addition to SBR and the like, CMC or a salt thereof, polyacrylic acid (PAA) or a salt thereof, polyvinyl alcohol, or the like may be included.

A porous sheet having ion permeability and an insulation property is used as the separator 13. Specific examples of the porous sheet include a microporous thin film, a woven fabric, and a nonwoven fabric. The material of the separator 13 is preferably a polyolefin resin such as polyethylene or polypropylene, or a cellulose. The separator 13 may be either a single layer structure or a laminated structure. A heat-resistant layer or the like may be formed on a surface of the separator 13.

As illustrated in FIG. 1, a positive electrode lead 20 is bonded to the positive electrode 11, and a negative electrode lead 21 is bonded on a winding finish-side end portion in the longitudinal direction of the negative electrode 12. The cylindrical battery 10 has an upper insulating plate 18 above the electrode assembly 14, and has a lower insulating plate 19 below the electrode assembly 14. The positive electrode lead 20 extends toward the sealing assembly 17 through a through hole of the upper insulating plate 18, and the negative electrode lead 21 extends toward a bottom plate portion 68 of the exterior housing can 16 through the outside of the lower insulating plate 19. The positive electrode lead 20 is connected to a lower surface of a terminal cap 27 of the sealing assembly 17, by means of welding or the like, and the terminal cap 27 serves as a positive electrode terminal. The negative electrode lead 21 is connected to an inner surface of the bottom plate portion 68 of the metal exterior housing can 16 by means of welding or the like, and the exterior housing can 16 serves as a negative electrode terminal.

In the example illustrated in FIGS. 1 and 2, the positive electrode lead 20 is electrically connected to an intermediate portion such as a center portion in the winding direction of the positive electrode current collector, and the negative electrode lead 21 is electrically connected to a winding finish-side end portion in the winding direction of the negative electrode current collector. However, the negative electrode lead may be electrically connected to a winding start-side end portion in the winding direction of the negative electrode current collector. Alternatively, the electrode assembly may have two negative electrode leads in which one of the negative electrode leads is electrically connected to the winding start side-end portion in the winding direction of the negative electrode current collector, and the other negative electrode lead is electrically connected to the winding finish-side end portion in the winding direction of the negative electrode current collector. Alternatively, the winding finish-side end portion in the winding direction of the negative electrode current collector may be brought into contact with an inner surface of the exterior housing can so that the negative electrode and the exterior housing can are electrically connected to each other. Alternatively, the negative electrode lead may be electrically connected to the winding start-side end portion in the winding direction in the negative electrode current collector so that the winding finish-side end portion in the winding direction of the negative electrode current collector is brought into contact with an inner surface of the exterior housing can.

The exterior housing can 16 has the bottom plate portion 68, an annular corner portion 42 that is connected to a radially outward end portion of the bottom plate portion 68 and is bent axially upward, a cylindrical-shaped cylindrical portion 43 that extends axially upward from a side opposite to a side of the bottom plate portion 68 in the corner portion 42, and a foldback portion 45 that is connected to an upper end portion in the axial direction of the cylindrical portion 43. The sealing assembly 17 has a washer 23 forming an annular first metal member, an annular gasket 28 having insulation, and the terminal cap 27. The gasket 28 forms of an insulating member, and the terminal cap 27 forms of a second metal member. The washer 23 has a foldback portion 31 at a radially outward end portion, and has an annular groove 32 that is open toward a radially inward side in the radially inward end portion. The foldback portion 31 of the washer 23 is fixed to the foldback portion 45 of the exterior housing can 16.

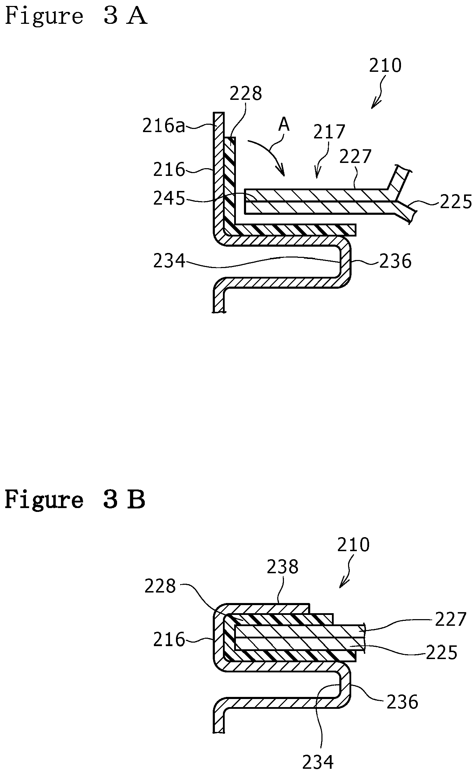

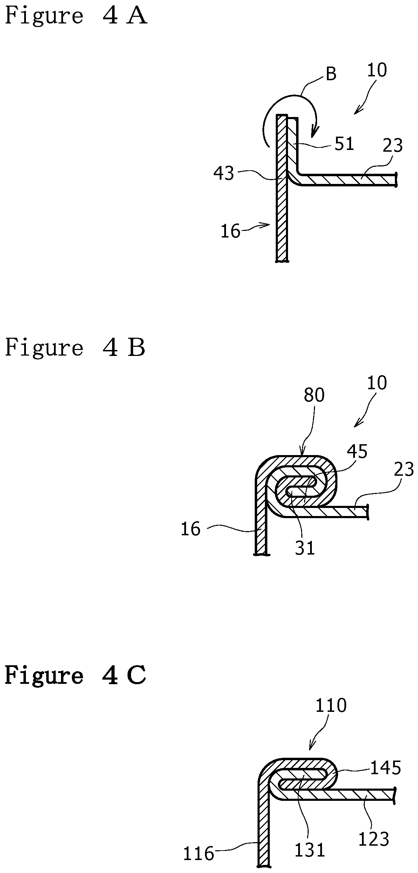

Specifically, the foldback portion 45 of the exterior housing can 16 and a foldback fixing structure 80 of the foldback portion 31 of the washer 23 are formed by foldback crimping, and the foldback portion 45 of the exterior housing can 16 and the foldback portion 31 of the washer 23 are simultaneously formed by foldback crimping. FIGS. 3A and 3B each are a schematic sectional view of one part of a cylindrical battery 210 illustrating a method of forming a shoulder portion 238 in the cylindrical battery 210 of Comparative Example, and FIGS. 4A and 4B each are a schematic sectional view of one part of the cylindrical battery 10 illustrating foldback crimping of the cylindrical battery 10.

As illustrated in FIGS. 3A and 3B, the cylindrical battery 210 has, in the exterior housing can 216, the grooved portion 234 that is annularly recessed toward the radially inward side, and thereby, the cylindrical battery 210 is provided with an annular projecting portion 236 that projects toward the radially inward side. The shoulder portion 238 (see FIG. 3B) of the cylindrical battery 210 is formed as follows. First, as illustrated in FIG. 3A, on the axially upper side of the annular projecting portion 236 in the exterior housing can 216, a laminated structure of a terminal cap 227 and a rupture plate 225 that form a circumferential edge portion of a sealing assembly 217 via a gasket 228 is disposed. Then, an upper end portion 216a of the exterior housing can 216 is caulked and bend inward toward a circumferential edge portion 245 of the sealing assembly 217 as indicated by an arrow A. In this manner, as illustrated in FIG. 3B, the shoulder portion 238 of the cylindrical battery 210 is formed, and the circumferential edge portion 245 of the sealing assembly 217 are held between the shoulder portion 238 and the annular projecting portion 236 via the gasket 228 to seal an opening portion in the exterior housing can 216.

In contrast, in the cylindrical battery 10, the foldback fixing structure 80 is formed as follows. First, as illustrated in FIG. 4A, the radially outward end portion of the washer 23 extending in the radial direction is folded back axially upward to form a cylindrical portion 51 on the radially outward side of the washer 23. Next, the cylindrical portion 51 is fitted to the cylindrical portion 43 of the exterior housing can 16 by press-fitting or the like so that a cylindrical outer circumferential surface of the cylindrical portion 51 is brought into contact with a cylindrical inner circumferential surface of the cylindrical portion 43 of the exterior housing can 16. Then, the cylindrical portions radially doubled are rewound by 360 degrees or more toward the radially inward side in the direction indicated by an arrow B so that the foldback fixing structure 80 illustrated in FIG. 4B is formed.

In the present embodiment, the cylindrical portions radially doubled are rewound by 360 degrees or more toward the radially inward side so that the foldback fixing structure 80 is formed, but the cylindrical portions radially doubled do not need to be rewound by 360 degrees or more. Specifically, as illustrated in FIG. 4C, that is, the schematic sectional view corresponding to FIG. 4B in the cylindrical battery 110 of the modified example, the folding back toward the radially inward side of the doubled cylindrical portions may be completed in a state in which the foldback portion 145 of the exterior housing can 116 is formed substantially in a U shape in sectional view and the foldback portion 131 of the washer 123 is formed substantially in a U shape in sectional view. In this way, the exterior housing can 116 and the washer 123 may be sealed and fixed to each other using a double seam used for sealing or the like of the can.

Referring back to FIG. 1, the foldback portion 45 of the exterior housing can 16 has a first flat portion 83 extending in an orthogonal direction, which is substantially orthogonal to the axial direction, at the axial tip. The terminal cap 27 has a second flat portion 85 extending in an orthogonal direction, which is substantially orthogonal to the axial direction, at the axial tip. The axial position of the first flat portion 83 is substantially the same as the position of the second flat portion 85. The gasket 28 is made of an annular member. The gasket 28 includes a housing portion 28a that is housed in the annular groove 32 of the washer 23. The gasket 28 has an annular groove 39 that is open toward the radially inward side. An outer edge portion on the radially outer side of the terminal cap 27 is housed in the annular groove 39.

The gasket 28 is held between the washer 23 and the terminal cap 27, and insulates the terminal cap 27 from the washer 23. The gasket 28 has a role of a seal material for maintaining the airtightness of the inside of the battery, and a role as an insulating material for insulating the terminal cap 27 from the washer 23. In producing the cylindrical battery 10, the terminal cap 27, the gasket 28, and the washer 23 are integrated, and then foldback crimping described with reference to FIGS. 4A and 4B is performed so that the opening portion of the exterior housing can 16 is sealed.

A bottom surface 68a of the bottom plate portion 68 of the exterior housing can 16 is provided with a circular thin-walled portion 71 centered at a radial center of the bottom plate portion 68. The thin-walled portion 71 forms an easy rupture portion. A portion surrounded by the circular thin-walled portion 71 in the bottom plate portion 68 forms a safety vent 72. It is configured to rupture the thin-walled portion 71 at the time of occurrence of the abnormal heat generation in the battery 10. In this manner, an opening is formed in a place where the safety vent 72 is present so that high-temperature gas in the battery is discharged to the outside. In the present embodiment, a case has been described where the circular thin-walled portion 71 forms an easy rupture portion, but, for example, a C-shaped thin-walled portion may be provided on the bottom side of the bottom plate portion to form an easy rupture portion. The easy rupture portion has any shape that enables an opening to be formed in a place where the safety vent 72 is present, and the shape thereof is not limited to a circular shape and a C shape.

### <Example>

A cylindrical battery illustrated in FIG. 1 was produced. A sealing assembly was produced by installing a gasket to a terminal cap and caulking and press-fitting the gasket to a washer. An electrode assembly was produced using a positive electrode, a negative electrode, a separator, a positive electrode lead, and a negative electrode lead, and the electrode assembly was inserted into an exterior housing can. The exterior housing can was not subjected to the groove-forming processing. An electrolyte solution was injected into the exterior housing can. Then, the exterior housing can was wound around and caulked to an outer edge portion of the sealing assembly and an opening portion of the exterior housing can was capped with the sealing assembly, so that a cylindrical lithium ion battery was produced.

### <Comparative Example>

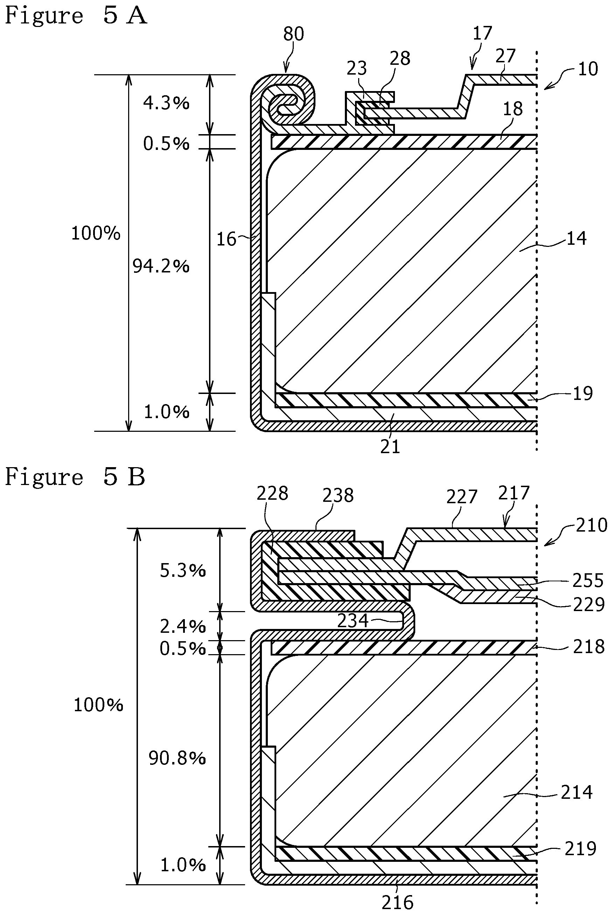

A cylindrical battery illustrated in FIG. 5B was produced. An electrode assembly 214 was produced using a positive electrode, a negative electrode, a separator, a positive electrode lead, and a negative electrode lead, and the electrode assembly 214 was inserted into the exterior housing can 216. A bottom plate portion of the exterior housing can 216 and the negative electrode lead was welded to each other, and a grooved portion 234 was formed. A gasket 228 was inserted, the positive electrode lead and a sealing assembly 217 were welded to each other, and then, an electrolyte solution was injected into the exterior housing can 216. Subsequently, an upper end portion of the exterior housing can 216 was bent toward a radial inward side to form a shoulder portion 238, and an opening portion of the exterior housing can 216 was sealed by the sealing assembly 217, so that a cylindrical lithium ion battery was produced. The sealing assembly 217 was produced by welding a terminal cap 227, a rupture plate 225, and a terminal plate 229.

### [Details of Battery Height]

**[Table 1]**

| | Comparative Example | Example |
|---|---|---|
| Total height | 100% | 100% |
| Height of sealing assembly | 5.3% | 4.3% |
| Height of grooved portion | 2.4% | 0% |
| Thickness of upper insulating plate | 0.5% | 0.5% |
| Height of electrode assembly | 90.8% | 94.2% |
| Total thickness of thickness of lower insulating plate, thickness of negative electrode lead, and thickness of exterior housing can | 1.0% | 1.0% |

Table 1 shows a rate of the cylindrical battery 10 of Example to a full length of the battery of each component in the cylindrical battery 210 of Comparative Example. FIG. 5A illustrates the details of the battery height at each portion in the cylindrical battery 10 of Example, and FIG. 5B illustrates the details of the battery height at each portion in the cylindrical battery 210 of Comparative Example. As illustrated in FIGS. 5A and 5B and Table 1, the sealing assembly 17 in the cylindrical battery 10 of Example has a simpler structure than that of the sealing assembly 217 of the cylindrical battery 210 of Comparative example, and the thickness of the sealing assembly 17 can be reduced by 1.0% of the full length of the battery as compared with the thickness of the sealing assembly 217 of the cylindrical battery 210 of Comparative Example. Furthermore, since the cylindrical battery 10 of Example is different from the cylindrical battery 210 of Comparative Example in that the grooved portion 234 is not present, an additional space corresponding to 2.4% of the full length of the battery can be used for housing of the electrode assembly 14, and therefore the axial height of the electrode assembly 14 can be increased by the amount of 3.4% of the full length of the battery as compared with the electrode assembly 214 of Comparative Example, so that the battery capacity can be greatly increased.

### [Advantages When Battery Pack is Produced]

In some cases, a plurality of cylindrical batteries are electrically connected to produce a battery pack with large output and large capacity. When the battery pack is produced, lead tabs are welded to the positive and negative electrodes of the battery, but from the viewpoint of ease of welding, the lead tabs are normally welded to a top surface (positive electrode) of the sealing assembly and a can bottom (negative electrode) to collect current. However, from the viewpoint of improving productivity, the top surface (positive electrode) of the sealing assembly and the shoulder portion (negative electrode) of the battery are preferably welded to the lead tabs to collect current.

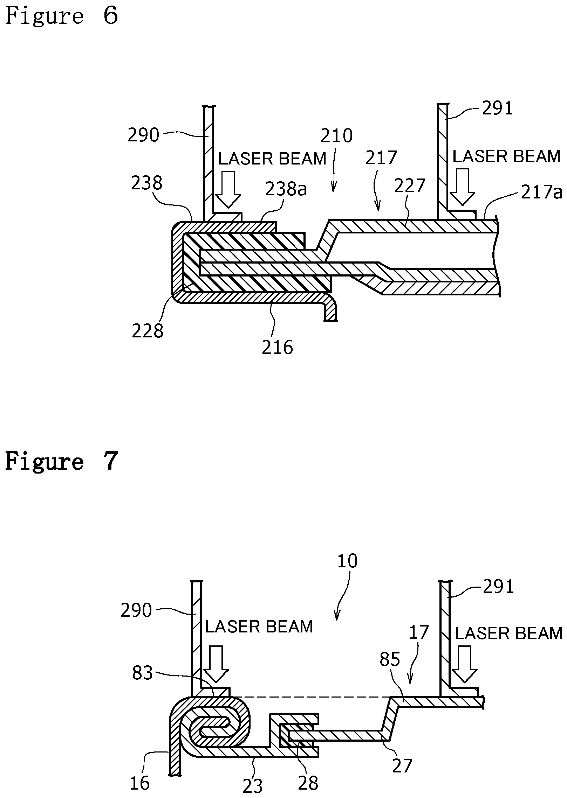

However, as illustrated in FIG. 6 or an expanded sectional view of a periphery of the shoulder portion 238 of a cylindrical battery 210 of a Reference Example, in the cylindrical battery 210, a gasket 228 is present in vicinity of the shoulder portion 238, and therefore, when a lead tab 290 for connecting the negative electrode is laser-welded to the shoulder portion 238, the gasket 228 is melted due to the thermal influence, which may makes it impossible to maintain good sealability. A top surface 217a of the sealing assembly 217 and an upper surface 238a of the shoulder portion 238 are different in axial height position, which makes it difficult to laser-weld the lead tab 290 and the lead tab 291 for connecting the positive electrode.

In contrast, as illustrated in FIG. 7 or an expanded sectional view corresponding to FIG. 6 in the cylindrical battery 10 of Example, in the cylindrical battery 10, the exterior housing can 16 is rewound and caulked to the sealing assembly 17 to be seal-fixed, and a gasket is not present in the vicinity of the axially upper side and radially outward end portion of the cylindrical battery 10. Therefore, even when heat is added to the vicinities of such end portions, the sealability is not affected. Therefore, the lead tab 290 for connecting the negative electrode can be welded to the vicinities of the end portions. Furthermore, in the cylindrical battery 10, an axial position of the first flat portion 83 located at a tip of the foldback portion 45 of the exterior housing can 16 is substantially the same as an axial position of the second flat portion 85 located at a tip of the terminal cap 27. Accordingly, this makes it easy to laser-weld a pair of the lead tab 290 for connecting the negative electrode and the lead tab 291 for connecting the positive electrode, so that the productivity of the battery pack can be greatly improved.

The present inventors actually performed laser welding of the lead tab 290 and the lead tab 291 for connecting the positive electrode using 10 samples as illustrated in FIGS. 6 and 7 and visually checked the thermal influence after the welding. Specifically, a breakage inspection was performed on the cylindrical battery 210 of Comparative Example after welding to visually check the presence or absence of melting of the gasket 228. Table 2 shows the results.

**[Table 2]**

| Comparative Example | Example |
|---|---|
| Presence of gasket melting in 10/10 | No problem in sealability in 10/10 |

In the cylindrical battery 210 of Comparative Example, gasket melting could be found in all of the ten samples, and when laser-welding was performed on the shoulder portion, it could be confirmed that problems might occur in the sealability and insulation. On the other hand, in the cylindrical battery 10 of Example, it was confirmed that no problem occurred in the sealability of all samples. Accordingly, when the cylindrical battery of the present disclosure is produced, both of the lead tab 290 for connecting the negative electrode and the lead tab 291 for connecting the positive electrode can be laser-welded to the axially upper side of the battery and the productivity of the battery pack can be greatly improved.

### REFERENCE SIGNS LIST

10, 110 Cylindrical battery, 11 Positive electrode, 12 Negative electrode, 13 Separator, 14 Electrode assembly, 16, 116 Exterior housing can, 17 Sealing assembly, 18 Upper insulating plate, 19 Lower insulating plate, 20 Positive electrode lead, 21 Negative electrode lead, 23, 123 Washer (first metal member), 27 Terminal cap (second metal member), 28 Gasket (insulating member), 28a Housing portion, 31, 131 Foldback portion of washer (second foldback portion), 32 Annular groove of washer, 39 Annular groove of gasket, 42 Corner portion, 43 Cylindrical portion, 45, 145 Foldback portion of exterior housing can (first foldback portion), 68 Bottom plate portion, 68a Bottom surface, 71 Thin-walled portion, 72 Safety vent, 80 Foldback fixing structure, 83 First flat portion, 85 Second flat portion

## Claims

1. A cylindrical battery, comprising:
an exterior housing can;
an electrode assembly that is housed in the exterior housing can; and
a sealing assembly with which an opening portion of the exterior housing can is capped,
wherein the exterior housing can has:
a bottom plate portion;
a cylindrical portion that is connected to the bottom plate portion via an annular corner portion that is located on a radially outward side, and extends in an axial direction; and
a first foldback portion that is connected to an end portion on a side opposite to a side of the corner portion in the cylindrical portion in the axial direction; and
the sealing assembly has a second foldback portion in which an end portion of the radially outward side is fixed to the first foldback portion.

2. The cylindrical battery according to claim 1, wherein
the sealing assembly has:
an annular first metal member that has the second foldback portion, and a first annular groove that is located at a radially inward end portion and is open toward the radially inward side;
an annular insulating member that has a second annular groove that is housed in the first annular groove and is open toward the radially inward side; and
a second metal member that has a radially outward edge portion housed in the second annular groove.

3. The cylindrical battery according to claim 2, wherein
the first foldback portion has a first flat portion extending in an orthogonal direction, which is substantially orthogonal to the axial direction, at an axial tip,
the second metal member has a second flat portion extending in the orthogonal direction at the axial tip, and
an axial position of the first flat portion is substantially the same as an axial position of the second flat portion.
